# EUROPEAN PATENT APPLICATION

(11) **EP 4 591 720 A1**
(43) Date of publication of application: **30.07.2025**
(21) Application number: 23868159.7
(22) Date of filing: 19.09.2023
(51) Int. Cl.: A23L 27/00, A23F 5/24, A23L 5/00, A23L 27/20

(54) **ORAL COMPOSITION**

(30) Priority: 20.09.2022 JP 2022149483
(71) Applicant: Kao Corporation, Chuo-ku, Tokyo 103-8210 (JP)
(72) Inventor: ISHI, Kotaro, Tokyo 131-8501 (JP); OOKI, Yoriko, Odawara-shi, Kanagawa 250-0002 (JP)
(74) Representative: Hoffmann Eitle
(86) International application number: PCT/JP2023/033844
(87) International publication number: WO 2024/063038

(57) **Abstract**

Provided is a solid oral composition, including the following components (A) and (B): (A) 0.00005 mass ppm to 40 mass ppm of a branched fatty acid; and (B) pyrazines, in which a mass ratio of the component (B) to the component (A), [(B)/(A)], is 0.015 or more.

## Description

### Field of the Invention

The present invention relates to an oral composition.

### Background of the Invention

A flavor is an important factor in determining the palatability of a food and beverage because the deliciousness of the food and beverage is found by sensing its taste together with its flavor. Various investigations have conventionally been made on a technology for an improvement in taste and flavor of the food and beverage. For example, it is reported that when a predetermined amount of pyrazines to theobromine is incorporated, the pyrazines are dispersed in a vegetable oil and fat containing cacao butter, and hence a rich cacao taste and flavor can be imparted to a conventional cacao raw material; and when isovaleric acid is further incorporated together with the pyrazines, the rich cacao taste and flavor can be imparted even with a small amount of cacao raw material in relation to conventional cacao material (Patent Document 1). In addition, it is reported that when a trace amount of wine lactone that has conventionally been considered as a fruit-like aroma substance is added to a roasted palatable beverage, such as coffee, cocoa, roasted green tea, coarse tea, brown rice tea, barley tea, roasted brown rice, adlay tea, buckwheat tea, or black mate tea, a lingering taste and flavor can be imparted (Patent Document 2).

[Patent Document 1] JP-A-2020-156433
[Patent Document 2] JP-A-2006-20526

### Summary of the Invention

The present invention provides the following [1] to [10].
[1] An oral composition, comprising the following components (A) and (B): (A) 0.00005 mass ppm to 40 mass ppm of a branched fatty acid; and (B) pyrazines, wherein a mass ratio of the component (B) to the component (A), [(B)/(A)], is 0.015 or more.
[2] The oral composition according to [1], wherein the component (A) is one or more selected from the group consisting of isobutyric acid, 2-methylbutyric acid, and isovaleric acid.
[3] The oral composition according to [1] or [2], wherein the component (B) is one or more selected from the group consisting of pyrazine, methylpyrazine, ethylpyrazine, dimethylpyrazine, trimethylpyrazine, tetramethylpyrazine, ethylmethylpyrazine, isobutylmethylpyrazine, ethyldimethylpyrazine, dimethylethylpyrazine, diethylmethylpyrazine, acetylpyrazine, methoxymethylpyrazine, and isobutylmethoxypyrazine.
[4] The oral composition according to any one of [1] to [3], wherein a content of the component (B) is from 0.004 mass ppm to 60 mass ppm.
[5] The oral composition according to any one of [1] to [4], further comprising 4-vinylguaiacol as a component (C), wherein a mass ratio of the component (B) to a total amount of the component (A) and the component (C), [(B)/[(A)+(C)]], is 0.01 or more.
[6] The oral composition according to any one of [1] to [5], wherein a mass ratio of the component (B) to the component (C), [(B)/(C)], is from 0.03 to 8.
[7] The oral composition according to any one of [1] to [6], wherein the oral composition is a solid oral composition.
[8] The oral composition according to any one of [1] to [6], wherein the oral composition is a liquid oral composition.
[9] A suppressant for an unpleasant odor of a branched fatty acid or 4-vinylguaiacol, comprising pyrazines as an active ingredient.
[10] A method of suppressing an unpleasant odor of a branched fatty acid, comprising causing (B) pyrazines to coexist at a mass ratio [(B)/(A)] of 0.015 or more with respect to (A) the branched fatty acid.

### Detailed Description of the Invention

Patent Document 1 describes isovaleric acid as a component that contributes to the enhancement of a cacao taste and flavor together with the pyrazines. However, a branched fatty acid such as isovaleric acid is typically recognized as a causative substance for an unpleasant odor, and hence unpleasantness or disgust is caused by a unique odor when an oral composition comprising the branched fatty acid is ingested or after such composition is ingested.

The present invention relates to an oral composition by which the unpleasant odor of a branched fatty acid is suppressed.

In view of the above-mentioned problem, the present inventors made extensive investigations. As a result, they found that the unpleasant odor of a branched fatty acid was able to be suppressed by incorporating pyrazines at a certain quantitative ratio or more with respect to the branched fatty acid. Further, they found that even when 4-vinylguaiacol known as a causative substance for an unpleasant odor was incorporated, the unpleasant odor of the branched fatty acid and that of 4-vinylguaiacol were able to be simultaneously suppressed by incorporating the pyrazines at a predetermined content ratio or more with respect to the total amount of the branched fatty acid and 4-vinylguaiacol.

According to the present invention, the oral composition by which the unpleasant odor of a branched fatty acid is suppressed can be provided.

### [Oral Composition]

An oral composition of the present invention contains a branched fatty acid as a component (A). As used herein, the term "branched fatty acid" refers to a fatty acid having a branched chain.

The component (A) may be any one of a saturated fatty acid and an unsaturated fatty acid as long as the component has an unpleasant odor. The component is preferably a short-chain, branched, and saturated fatty acid from the viewpoint that it easily achieves the effect of the present invention. As used herein, the term "short-chain, branched, and saturated fatty acid" refers to a branched and saturated fatty acid having 7 or less carbon atoms. The number of the carbon atoms of the short-chain, branched, and saturated fatty acid is preferably 5 or less.

Specific examples of the component (A) may include isobutyric acid, 2-methylbutyric acid, and isovaleric acid. The components (A) may be incorporated alone or in combination thereof. Isobutyric acid, 2-methylbutyric acid, and isovaleric acid are each known as a causative substance for a so-called fermented soybean odor. Further, isovaleric acid has an irritating odor involving unpleasantness, such as a sweat odor, a foot odor, or an aging odor, and is known to be a causative substance for a half-dried odor or the odor of the sole of a foot.

Of those, one or more selected from the group consisting of isobutyric acid, 2-methylbutyric acid, and isovaleric acid are each preferred as the component (A) from the viewpoint that it easily achieves the effect of the present invention. Isovaleric acid is more preferred.

While a commercial reagent may be used as the component (A), the extract of a plant containing the component (A) may be used. When the plant extract is used as the component (A), a method for the extraction of the plant extract and conditions for the extraction are not particularly limited, and a known method may be adopted. In addition, the plant extract may be a concentrated product or a dried product, or may be a purified product having improved purity. A known method has to be adopted as a method for each of concentration, drying, and purification.

The plant is not particularly limited as long as the plant contains the component (A). One or more selected from the group consisting of a green coffee bean and a lightly roasted coffee bean are preferred, and a green coffee bean is more preferred. As used herein, the term "lightly roasted coffee bean" refers to a roasted coffee bean having an L value of 30 or more and 60 or less. The lightly roasted coffee bean having such L value is free of a roasted flavor peculiar to a coffee beverage. From the viewpoints of the suppression of the unpleasant odor of the component (A), and a physiological effect, the L value of the lightly roasted coffee bean is preferably 32 or more, more preferably 34 or more, still more preferably 36 or more, still further more preferably 38 or more, still further more preferably 40 or more. The term "L value" as used herein refers to a value obtained by measuring the brightness of a roasted coffee bean with a color-difference meter while setting a black color and a white color to an L value of 0 and an L value of 100, respectively. The kind and production site of the coffee bean are not particularly limited.

While the content of the component (A) in the oral composition of the present invention is from 0.00005 mass ppm to 40 mass ppm, from the viewpoint that a suppressing effect on the unpleasant odor of the branched fatty acid can be obtained to a larger extent, the content is preferably 0.0001 mass ppm or more, more preferably 0.004 mass ppm or more, still more preferably 0.008 mass ppm or more, still further more preferably 0.3 mass ppm or more. In addition, from the viewpoint of suppressing the chemical odor of pyrazines serving as a component (B) to be described later, the content is preferably 25 mass ppm or less, more preferably 15 mass ppm or less, still more preferably 8 mass ppm or less, still further more preferably 1 mass ppm or less. In addition, the content of the component (A) in the oral composition of the present invention is preferably from 0.0001 mass ppm to 25 mass ppm, more preferably from 0.0004 mass ppm to 15 mass ppm, still more preferably from 0.0008 mass ppm to 8 mass ppm, even further more preferably from 0.3 mass ppm to 1 mass ppm. The content of the component (A) may be analyzed by an analysis method suitable for the state of a measurement sample, such as a GC/MS method or a HPLC method, among generally known analysis methods, or its analysis may be submitted to a third-party organization. The analysis by the GC/MS method may be submitted to, for example, Japan Food Research Laboratories, and the analysis by the HPLC method may be submitted to, for example, Shimadzu Techno-Research, Inc.

The oral composition of the present invention contains pyrazines as a component (B). The component (B) is effective in suppressing the unpleasant odor of the component (A), and can suppress the unpleasant odor when used at a specific mass ratio with respect to the component (A). As used herein, the term "pyrazines" refers to a compound having a pyrazine structure in its molecule. The pyrazine is known as one of aroma components that form, for example, the fragrant and sweet flavor of a nut.

Examples of the component (B) may include pyrazine, methylpyrazine, ethylpyrazine, dimethylpyrazine, trimethylpyrazine, tetramethylpyrazine, ethylmethylpyrazine, isobutylmethylpyrazine, ethyldimethylpyrazine, dimethylethylpyrazine, diethylmethylpyrazine, acetylpyrazine, methoxymethylpyrazine, and isobutylmethoxypyrazine. The components (B) may be incorporated alone or in combination thereof.

Of those, one or more selected from the group consisting of pyrazine, 2-methylpyrazine, 2-ethylpyrazine, 2,3-dimethylpyrazine, 2,5-dimethylpyrazine, 2,6-dimethylpyrazine, 2,3,5-trimethylpyrazine, 2,3,5,6-tetramethylpyrazine, 2-ethyl-3-methylpyrazine, 2-ethyl-5-methylpyrazine, 2-ethyl-6-methylpyrazine, 2-ethyl-3-methylpyrazine, 2-isobutyl-3-methylpyrazine, 2-ethyl-3,5-dimethylpyrazine, 2,3-diethyl-5-methylpyrazine, 2-acetylpyrazine, 2-methoxy-3-methylpyrazine, and 2-isobutyl-3-methoxypyrazine are each preferred as the component (B) from the viewpoint of suppressing the unpleasant odor of the branched fatty acid, one or more selected from the group consisting of pyrazine, 2-methylpyrazine, 2-ethylpyrazine, 2,5-dimethylpyrazine, 2-acetylpyrazine, and 2-methoxy-3-methylpyrazine are each more preferred, and 2-methoxy-3-methylpyrazine is still more preferred from the viewpoint of suppressing the chemical odor of the pyrazines.

In addition, the component (B) may be a chemically synthesized product or a naturally-derived product. For example, pyrazines isolated from a natural product may be used.

The mass ratio of the component (B) to the component (A) in the oral composition of the present invention, [(B)/(A)], is 0.015 or more. From the viewpoint of suppressing the unpleasant odor of the branched fatty acid, the ratio is preferably 0.08 or more, more preferably 0.15 or more, still more preferably 0.4 or more. In addition, from the viewpoint of suppressing the chemical odor of the pyrazines, such mass ratio [(B)/(A)] is preferably 20 or less, more preferably 12 or less, still more preferably 6 or less, even further more preferably 0.8 or less. In addition, such mass ratio [(B)/(A)] is preferably from 0.015 to 20, more preferably from 0.015 to 12, still more preferably from 0.08 to 6, still further more preferably from 0.15 to 6, still further more preferably from 0.4 to 0.8.

From the viewpoint of suppressing the unpleasant odor of the branched fatty acid, the content of the component (B) in the oral composition of the present invention is preferably 0.004 mass ppm or more, more preferably 0.008 mass ppm or more, still more preferably 0.08 mass ppm or more, even further more preferably 0.18 mass ppm or more, still further more preferably 0.22 mass ppm or more. In addition, from the viewpoint of suppressing the chemical odor of the pyrazine, the content is preferably 60 mass ppm or less, more preferably 10 mass ppm or less, still more preferably 6 mass ppm or less, still further more preferably 4 mass ppm or less, still further more preferably 0.4 mass ppm or less. In addition, the content of the component (B) in the oral composition of the present invention is preferably from 0.004 mass ppm to 60 mass ppm, more preferably from 0.008 mass ppm to 10 mass ppm, more preferably from 0.08 mass ppm to 6 mass ppm, further more preferably from 0.18 mass ppm to 4 mass ppm, even further more preferably from 0.22 mass ppm to 0.4 mass ppm. The content of the component (B) may be measured by an analysis method suitable for the state of a measurement sample such as a GC/MS method among generally known analysis methods. A specific example thereof may be a method described in Examples to be described later. At the time of the measurement, for example, such treatment as described below may be appropriately performed as required: the sample is lyophilized so that the sample may be adapted to the detection range of an apparatus; or contaminants in the sample are removed so that the sample may be adapted to the resolution of the apparatus.

The oral composition of the present invention may contain 4-vinylguaiacol as a component (C). While 4-vinylguaiacol is known as a foreign odor substance causing, for example, a smoke odor, a chemical odor, or a spice odor in sake, the present inventors found that even when 4-vinylguaiacol was incorporated together with the branched fatty acid, unpleasant odors derived from the branched fatty acid and 4-vinylguaiacol were able to be simultaneously suppressed.

The component (C) may be derived from a raw material or newly added. One or more selected from the group consisting of a green coffee bean and a lightly roasted coffee bean are preferred as the raw material from which components derived, and a green coffee bean is more preferred. A specific aspect of the lightly roasted coffee bean is as described above.

From the viewpoint of simultaneously suppressing the unpleasant odors of the branched fatty acid and 4-vinylguaiacol, the mass ratio of the component (B) to the total amount of the component (A) and the component (C) in the oral composition of the present invention, [(B)/[(A)+(C)]], is preferably 0.01 or more, more preferably 0.02 or more, still more preferably 0.05 or more, still further more preferably 0.5 or more. In addition, from the viewpoint of suppressing the chemical odor of the pyrazine, such mass ratio [(B)/[(A)+(C)]] is preferably 5 or less, more preferably 4 or less, still more preferably 2 or less, still further more preferably 1 or less. In addition, such mass ratio [(B)/[(A)+(C)]] is preferably from 0.01 to 5, more preferably from 0.02 to 4, still more preferably from 0.05 to 2, still further more preferably from 0.5 to 1.

From the viewpoint of suppressing the unpleasant odor of 4-vinylguaiacol, the mass ratio of the component (B) to the component (C) in the oral composition of the present invention, [(B)/(C)], is preferably 0.03 or more, more preferably 0.6 or more, still more preferably 0.8 or more. In addition, from the viewpoint of suppressing the chemical odor of the pyrazine, such mass ratio [(B)/(C)] is preferably 8 or less, more preferably 3 or less, still more preferably 2 or less. In addition, such mass ratio [(B)/(C)] is preferably from 0.03 to 8, more preferably from 0.6 to 3, still more preferably from 0.8 to 2.

From the viewpoint of suppressing the unpleasant odor of 4-vinylguaiacol, the content of the component (C) in the oral composition of the present invention is preferably 0.1 mass ppm or more, more preferably 0.8 mass ppm or more, and is preferably 2 mass ppm or less, more preferably 1.4 mass ppm or less. In addition, the content of the component (C) is preferably from 0.1 mass ppm to 2 mass ppm, more preferably from 0.8 mass ppm to 1.4 mass ppm. The content of the component (C) may be measured by an analysis method suitable for the state of a measurement sample among generally known measurement methods, and may be measured by, for example, a GC/MS method. A specific example thereof may be a method described in Examples to be described later. At the time of the measurement, such treatment as described below may be appropriately performed as required: the sample is lyophilized so that the sample may be adapted to the detection range of an apparatus; or contaminants in the sample are removed so that the sample may be adapted to the resolution of the apparatus.

From the viewpoint that it easily achieves the effect of the present invention, the total content [(A)+(C)] of the component (A) and the component (C) in the oral composition of the present invention is preferably 0.5 mass ppm or more, more preferably 1 mass ppm or more. In addition, from the viewpoint of simultaneously suppressing the unpleasant odors of the branched fatty acid and 4-vinylguaiacol, such total content [(A)+(C)] is preferably 50 mass ppm or less, more preferably 45 mass ppm or less. In addition, such total content [(A)+(C)] is preferably from 0.5 mass ppm to 50 mass ppm, more preferably from 1 mass ppm to 45 mass ppm.

From the viewpoint that it easily achieves the effect of the present invention, the mass ratio of the component (C) to the component (A) in the oral composition of the present invention, [(C)/(A)], is preferably 0.5 or more, more preferably 1 or more. In addition, from the viewpoint of suppressing the chemical odor of the pyrazines, such mass ratio [(C)/(A)] is preferably 4 or less, more preferably 3 or less. In addition, such mass ratio [(C)/(A)] is preferably from 0.5 to 4, more preferably from 1 to 3.

The oral composition of the present invention may contain one or more kinds of additives, such as a sweetener, an acidulant, an amino acid, a protein, a vitamin, a mineral, a perfume, fruit juice, a plant extract, an ester, a coloring matter, an emulsifier, a milk component, cocoa powder, a seasoning, a vegetable oil and fat, an antioxidant, a preservative, a pH adjuster, a gelling agent, and a carrier, as desired. The content of the additive may be appropriately set within a range that does not impair the purpose of the present invention.

The term "oral composition" as used herein refers to a composition that is unlikely to cause harm to human health and is exclusively orally ingested in a general social life, and the composition is not limited by divisions, such as a food, a pharmaceutical, and a quasi-drug, in administrative divisions. Accordingly, the oral composition of the present invention encompasses a composition encompassing a wide variety of foods and beverages for forming, for example, a general food, a health food (functional food and beverage), a food with health claims (a food for specified health use, a food with nutrient function claims, or a food with function claims), a quasi-drug, and a pharmaceutical to be orally ingested.

The oral composition of the present invention may be a solid or a liquid at normal temperature (20°C±15°C), and may adopt any appropriate form. A suitable aspect of the oral composition of the present invention may be, for example, a solid oral composition or a liquid oral composition.

The oral composition of the present invention is preferably used for an oral composition excluding a coffee beverage. The coffee beverage is a beverage for savoring a roasted flavor peculiar to a roasted coffee bean, and the unpleasant odor of its branched fatty acid is masked with the roasted flavor. Accordingly, the problem of the unpleasant odor of the branched fatty acid may hardly occur. Such coffee beverage may be clearly distinguished as a product from the oral composition of the present invention because the content of furfuryl mercaptan (hereinafter referred to as "component (D)") in the beverage is typically 0.00006 mass% or more. That is, the content of the component (D) in the oral composition of the present invention is preferably less than 0.00006 mass%, more preferably less than 0.00003 mass%, still more preferably less than 0.00001 mass%, and the composition is still further more preferably substantially free of the component. As used herein, the phrase "substantially free of" is a concept encompassing not only a case in which the component (D) is completely absent in the oral composition of the present invention but also a case in which its concentration is less than a detection limit. The content of the component (D) may be measured by an analysis method suitable for the state of a measurement sample among generally known measurement methods, and may be measured by, for example, a GC/MS method. A specific example thereof may be a method described in Examples to be described later. At the time of the measurement, such treatment as described below may be appropriately performed as required: the sample is lyophilized so that the sample may be adapted to the detection range of an apparatus; or contaminants in the sample are removed so that the sample may be adapted to the resolution of the apparatus.

Meanwhile, the coffee beverage typically uses, as a raw material, roasted coffee beans including a roasted coffee bean having an L value of less than 30. Accordingly, the oral composition of the present invention involves a concept that does not encompass an oral composition (e.g., a coffee beverage) using, as a raw material, roasted coffee beans including a roasted coffee bean having an L value of preferably less than 30, more preferably less than 32, still more preferably less than 34, still further more preferably less than 36, still further more preferably less than 38, even more preferably less than 40. A coffee content in the coffee beverage includes a coffee content extracted or eluted from 1 g or more of roasted coffee beans in terms of green coffee beans in 100 g of a net content. The "value in terms of green beans" as used herein means that 1 g of roasted coffee beans corresponds to 1.3 g of green coffee beans (Newly Revised Edition·Soft Drinks, supervision: Japan Soft Drink Association, publication: Korin, published on December 25, 1989, described on page 421). In addition, the kind of the coffee beverage is not particularly limited, but examples thereof may include coffee beverages and the like defined in Article 2 of "Fair Competition Code on Labeling of Coffee Beverages and the Like" amended and enforced on the 19th day of August 2019, that is, "coffee", a "coffee beverage," a "coffee-containing soft drink," and a "coffee-containing carbonated beverage."

The solid oral composition of the present invention may be a solid that can be orally ingested as it is. Examples of the form thereof may include a powder form, a granule form, a tablet form, a rod form, a plate form, and a block form. A solid content in the solid oral composition of the present invention is typically 90 mass% or more, preferably 93 mass% or more, more preferably 95 mass% or more, still more preferably 97 mass% or more. The upper limit of such solid content is not particularly limited, and the solid content may be 100 mass%. As used herein, the term "solid content" refers to the mass of a residue obtained by drying a sample in an electric thermostat dryer at 105°C for 3 hours to remove its volatile substance. In addition, the water activity value (Aw) of the solid oral composition of the present invention is preferably 0.6 or less, more preferably 0.5 or less, still more preferably 0.4 or less, still further more preferably 0.3 or less from the viewpoint of obtaining the effect of the present invention. The lower limit value of the water activity value (Aw) is not particularly limited, and the value may be 0. As used herein, the term "water activity value" means the ratio of free water measured with a water activity meter at 20°C and 60%RH (relative humidity). For example, Pawkit (manufactured by Decagon Devices, Inc.) may be used as the water activity meter.

Examples of the solid oral composition of the present invention may include a food, a pharmaceutical, and a quasi-drug. Of those, a solid food is preferred from the viewpoint that it easily achieves the effect of the present invention, and a powder food is more preferred.

When the solid oral composition of the present invention is a solid food, examples thereof may include: confectionery, such as drop, candy, gum, chocolate, and cookie bread; and health/beauty/nutritional auxiliary food such as a supplement.

In addition, when the solid oral composition of the present invention is a pharmaceutical or a quasi-drug, examples of the dosage form thereof may include a granule, a powder, a tablet, a pill, a chewable, and a troche. In addition, when the composition is used as a tablet, a dividable tablet having formed therein a dividing line is permitted.

Of those, a supplement, a powder, a tablet, or a granule is preferred as the solid oral composition.

The solid oral composition of the present invention may contain an acceptable carrier as required so as to be formed into a solid form. Examples thereof may include carriers including: excipients (e.g., starches, such corn starch (corn), potato starch (potato), sweet potato starch (sweet potato), and tapioca starch; dextrin; sugar alcohols, such as xylitol, sorbitol, maltitol, lactitol, reduced palatinose, trehalose, and palatinose; lactose; oligosaccharides; crystalline cellulose; light silicic anhydride; and calcium hydrogen phosphate); binders (e.g., gelatin, pregelatinized starch, polyvinylpyrrolidone, polyvinyl alcohol, pullulan, and hydrogenated oils); disintegrants (e.g., carmellose, carmellose calcium, croscarmellose sodium, and crospovidone); lubricants (e.g., calcium stearate, magnesium stearate, sucrose fatty acid esters, sodium stearyl fumarate, talc, and silicon dioxide); taste-making agents (e.g., stevia); extenders; surfactants; dispersants; buffers; antioxidants; preservatives; quality stabilizers; and diluents, and a carrier free of any unpleasant odor is preferably selected and used. For example, dextrin, maltitol, or lactose is suitably used as the excipient because such excipient is free of any unpleasant odor.

In addition, the solid oral composition of the present invention may be an instant beverage composition. As used herein, the term "instant beverage composition" refers to a composition that is diluted with a liquid in accordance with a predetermined usage method and orally ingested as a reconstituted beverage. The liquid is not particularly limited as long as the liquid can reconstitute the composition into a beverage. Examples of the liquid may include water, carbonated water, cow's milk, and soy milk. The temperature of the liquid is not limited. A dilution factor is selected in accordance with a predetermined usage method, and is typically from 30 mass-fold to 800 mass-fold, preferably from 80 mass-fold to 600 mass-fold.

The solid oral composition of the present invention may be produced in accordance with a conventional method, and an appropriate method may be adopted. For example, the solid oral composition of the present invention may be produced by mixing the component (A) and the component (B), and as required, any other component so that the mass ratio of the component (B) to the component (A), [(B)/(A)], may fall within the above-mentioned ranges. The mixing order of the component (A) and the component (B) is not particularly limited. One component may be added to the other, or both the components may be simultaneously added. While an appropriate method, such as stirring or shaking, may be adopted as a method for the mixing, a mixing apparatus may be used. The mixing system of the mixing apparatus may be of a rotating vessel type or a fixed vessel type. As the rotating vessel type, for example, a horizontal cylinder type, a V type, a double-cone type, or a cubic type may be adopted. In addition, as the fixed vessel type, for example, a ribbon type, a screw type, a conical screw type, a paddle type, a fluidized bed type, or a Phillips blender may be adopted.

In addition, the solid oral composition of the present invention may be produced as a granulated product by a known granulation method. Examples of the granulation method may include spray granulation, fluidized bed granulation, compression granulation, tumbling granulation, stirring granulation, extrusion granulation, and powder coating granulation. Granulation conditions may be appropriately selected in accordance with the granulation method. In addition, when the solid oral composition is produced as a tablet, any of wet tableting and dry tableting may be adopted, and a known compression molding machine may be used.

The solid oral composition of the present invention may be loaded into a package. Examples of the package may include a bottle, a can, a box-type container, a stick-type package, and a pillow-type package. When the solid oral composition of the present invention is loaded into the package, a commercial loading machine may be used. For example, small portions each corresponding to one intake of the solid oral composition of the present invention may be individually packaged. When the solid oral composition is an instant beverage composition, the composition may be, for example, any one of the following: a product that is filled in a container such as a bottle, and is weighed in an amount of a cup with a spoon or the like before drinking; a cup type accommodating an amount corresponding to a cup; and a stick type in which small portions each corresponding to a cup are individually packaged. In addition, when the oral composition of the present invention is a concentrated liquid form, an example thereof may be such a portion-type dilution beverage that small portions each corresponding to a cup are individually packaged.

The inside of the container and the inside of a packaging material may be filled with a nitrogen gas, and the packaging material preferably has low oxygen permeability from the viewpoint of quality maintenance.

The form of the liquid oral composition of the present invention is not particularly limited as long as the composition has fluidity at normal temperature (20°C±15°C). Examples thereof may include a liquid, a concentrated liquid form, a gel form, and a jelly form.

Examples of the product form of the liquid oral composition of the present invention may include: a ready-to-drink (RTD)-type beverage composition; dairy products, such as yogurt, processed milk, and fermented milk; an oil and fat, and an oil and fat processed food, such as a salad oil, a tempura oil, margarine, mayonnaise, shortening, whipped cream, and dressing; seasonings, such as sauce and tare sauce; and health, beauty, and dietary supplements such as a drinkable preparation. As used herein, the term "RTD-type beverage composition" refers to a beverage that can be drunk as it is without being diluted.

Of those, an RTD-type beverage composition is preferred as the liquid oral composition. Examples of the form of the RTD-type beverage composition may include a liquid, a concentrated liquid form, a gel form, and a jelly form. When the form is a concentrated liquid form, a gel form, or a jelly form, the beverage composition has to be capable of being sucked from a suction opening or a straw attached to its container, and its solid content concentration is not particularly limited.

From the viewpoint of its taste and flavor, the pH (20°C) of the RTD-type beverage composition is preferably 3 or more, more preferably 3.5 or more, still more preferably 4 or more, and is preferably 7 or less, more preferably 6.5 or less, still more preferably 6 or less. In addition, such pH (20°C) is preferably from 3 to 7, more preferably from 3.5 to 6.5, still more preferably from 4 to 6. The pH is measured with a pH meter after the temperature of the composition has been adjusted to 20°C.

The RTD-type beverage composition may be a non-alcoholic beverage or an alcoholic beverage. As used herein, the term "non-alcoholic beverage" refers to a beverage having an alcohol concentration of less than 1 v/v%, and encompasses a beverage that is completely free of any alcohol and a beverage having an alcohol concentration of 0.00 v/v%. The term "alcohol" as used herein means ethanol unless otherwise stated.

Examples of the non-alcoholic beverage may include a tea beverage, a carbonated beverage, a fruit juice beverage, a vegetable beverage, a dairy beverage, a sports beverage, an isotonic beverage, enhanced water, bottled water, near water, a dietary drinkable preparation, and a beauty drinkable preparation.

Examples of the alcoholic beverage may include beer, wine, sake, plum liquor, sparkling liquor, whiskey, brandy, Japanese distilled spirit, rum, gin, and liqueurs.

The RTD-type beverage composition may be packed in a container. The container is not particularly limited as long as the container is a typical packaging container, and examples thereof may include: a molded container containing polyethylene terephthalate as a main component (so-called plastic bottle); a metal can; a paper container composited with metal foil or a plastic film; and a bottle.

When the RTD-type beverage composition is a container-packed beverage composition, the composition may have already been sterilized by heating. A method for the heat sterilization is not particularly limited as long as the method conforms to conditions specified in laws and regulations to be applied (the Food Sanitation Act in Japan).

The liquid oral composition of the present invention may be produced in accordance with a conventional method, and any appropriate method may be adopted. The composition may be produced by, for example, mixing the component (A) and the component (B), and as required, any other component together with a liquid so that the mass ratio of the component (B) to the component (A), [(B)/(A)], may fall within the above-mentioned ranges. The order in which the component (A), the component (B), and the other component are mixed is not particularly limited, and the components may be added in any order. Examples of the liquid may include water, carbonated water, cow's milk, and soy milk. The temperature of the liquid is not limited.

In addition, one or more selected from the group consisting of the solid oral composition and liquid oral composition of the present invention may be added to a food and beverage to provide the final product. The time point at which the composition is added to the food and beverage is not particularly limited. The composition may be added before the production of the food and beverage, during the production, or after the production. In addition, the composition may be added immediately before the eating thereof or during the eating.

### [Suppressant for Unpleasant Odor of Branched Fatty Acid and Method of suppressing the Unpleasant Odor]

In each of a suppressant for an unpleasant odor and a method of suppressing an unpleasant odor of the present invention, pyrazines are used as an active ingredient, and the suppressant and the method are exclusively used in the suppression of the unpleasant odor of a branched fatty acid. The specific configurations of (A) the branched fatty acid and (B) the pyrazines are as described above.

In each of the suppressant for an unpleasant odor and method of suppressing an unpleasant odor of the present invention, the branched fatty acid and the pyrazines have to be caused to coexist. In that case, the mass ratio of (B) the pyrazines to (A) the branched fatty acid, [(B)/(A)], is preferably controlled within the above-mentioned ranges.

The suppressant for an unpleasant odor of the present invention may also be used in the suppression of the unpleasant odor of 4-vinylguaiacol. In this case, 4-vinylguaiacol and the pyrazines have to be caused to coexist, and from the viewpoint of effectively suppressing the unpleasant odor of 4-vinylguaiacol, the mass ratio of (B) the pyrazines to (C) 4-vinylguaiacol, [(B)/(C)], is preferably controlled within the above-mentioned ranges.

In addition, the suppressant for an unpleasant odor of the present invention may be applied not only to the branched fatty acid but also to an oral product containing the branched fatty acid.

The oral product is not particularly limited as long as the product can be orally ingested, and the product may be a liquid or a solid. The product may be, for example, a food and beverage, a pharmaceutical, or a quasi-drug containing the branched fatty acid. Of those, a food and beverage is preferred.

The food and beverage may be, for example, a solid food containing the branched fatty acid, or a beverage or an instant beverage containing the branched fatty acid. The food and beverage may be produced in accordance with a conventional method depending on the kind of the food and beverage.

The dosage form of each of the pharmaceutical and the quasi-drug is not particularly limited, and is, for example, a preparation for oral administration. For example, a known dosage form, such as a solution or syrup, may be adopted. In addition, when the pharmaceutical or the quasi-drug is turned into the preparation, a known additive may be blended. The pharmaceutical and the quasi-drug may each be produced in accordance with a conventional method.

The respective contents of (A) the branched fatty acid and (B) the pyrazines in the oral product, and the mass ratio [(B)/(A)] are as described above. Further, 4-vinylguaiacol may be incorporated into the oral product, and the content of (C) 4-vinylguaiacol and the mass ratio [(B)/[(A)+(C)]] are as described above.

In relation to the above-mentioned embodiments, the present invention further discloses the following aspects.

<1> A solid oral composition, comprising the following components (A) and (B): (A) 0.00005 mass ppm to 40 mass ppm of a branched fatty acid; and (B) pyrazines, wherein a mass ratio of the component (B) to the component (A), [(B)/(A)], is 0.015 or more.
<2> A liquid oral composition, comprising the following components (A) and (B): (A) 0.00005 mass ppm to 40 mass ppm of a branched fatty acid; and (B) pyrazines, wherein a mass ratio of the component (B) to the component (A), [(B)/(A)], is 0.015 or more.
<3> The oral composition according to <1> or <2>, wherein the component (A) is preferably one or more selected from the group consisting of isobutyric acid, 2-methylbutyric acid, and isovaleric acid.
<4> The oral composition according to <1> or <2>, wherein the component (A) is preferably isobutyric acid.
<5> The oral composition according to any one of <1> to <4>, wherein a content of the component (A) in the oral composition is preferably 0.0001 mass ppm or more, more preferably 0.004 mass ppm or more, still more preferably 0.008 mass ppm or more, still further more preferably 0.3 mass ppm or more, and is preferably 25 mass ppm or less, more preferably 15 mass ppm or less, still more preferably 8 mass ppm or less, still further more preferably 1 mass ppm or less.
<6> The oral composition according to any one of <1> to <4>, wherein a content of the component (A) in the oral composition is preferably from 0.0001 mass ppm to 25 mass ppm, more preferably from 0.0004 mass ppm to 15 mass ppm, still more preferably from 0.0008 mass ppm to 8 mass ppm, still further more preferably from 0.3 mass ppm to 1 mass ppm.
<7> The oral composition according to any one of <1> to <6>, wherein the component (B) is preferably one or more selected from the group consisting of pyrazine, methylpyrazine, ethylpyrazine, dimethylpyrazine, trimethylpyrazine, tetramethylpyrazine, ethylmethylpyrazine, isobutylmethylpyrazine, ethyldimethylpyrazine, dimethylethylpyrazine, diethylmethylpyrazine, acetylpyrazine, methoxymethylpyrazine, and isobutylmethoxypyrazine.
<8> The oral composition according to any one of <1> to <6>, wherein the component (B) is preferably one or more selected from the group consisting of pyrazine, 2-methylpyrazine, 2-ethylpyrazine, 2,3-dimethylpyrazine, 2,5-dimethylpyrazine, 2,6-dimethylpyrazine, 2,3,5-trimethylpyrazine, 2,3,5,6-tetramethylpyrazine, 2-ethyl-3-methylpyrazine, 2-ethyl-5-methylpyrazine, 2-ethyl-6-methylpyrazine, 2-ethyl-3-methylpyrazine, 2-isobutyl-3-methylpyrazine, 2-ethyl-3,5-dimethylpyrazine, 2,3-diethyl-5-methylpyrazine, 2-acetylpyrazine, 2-methoxy-3-methylpyrazine, and 2-isobutyl-3-methoxypyrazine.
<9> The oral composition according to any one of <1> to <6>, wherein the component (B) is preferably one or more selected from the group consisting of pyrazine, 2-methylpyrazine, 2-ethylpyrazine, 2,5-dimethylpyrazine, 2-acetylpyrazine, and 2-methoxy-3-methylpyrazine.
<10> The oral composition according to any one of <1> to <6>, wherein the component (B) is preferably 2-methoxy-3-methylpyrazine.
<11> The oral composition according to any one of <1> to <10>, wherein a content of the component (B) in the oral composition is preferably 0.004 mass ppm or more, more preferably 0.008 mass ppm or more, still more preferably 0.08 mass ppm or more, still more preferably 0.18 mass ppm or more, still further more preferably 0.22 mass ppm or more, and is preferably 60 mass ppm or less, more preferably 10 mass ppm or less, still more preferably 6 mass ppm or less, still more preferably 4 mass ppm or less, still further more preferably 0.4 mass ppm or less.
<12> The oral composition according to any one of <1> to <10>, wherein a content of the component (B) in the oral composition is preferably from 0.004 mass ppm to 60 mass ppm, more preferably from 0.008 mass ppm to 10 mass ppm, still more preferably from 0.08 mass ppm to 6 mass ppm, still more preferably from 0.18 mass ppm to 4 mass ppm, still further more preferably from 0.22 mass ppm to 0.4 mass ppm.
<13> The oral composition according to any one of <1> to <12>, wherein the mass ratio of the component (B) to the component (A), [(B)/(A)], is preferably 0.08 or more, more preferably 0.15 or more, still more preferably 0.4 or more, and is preferably 20 or less, more preferably 12 or less, still more preferably 6 or less, still further more preferably 0.8 or less.
<14> The oral composition according to any one of <1> to <12>, wherein the mass ratio of the component (B) to the component (A), [(B)/(A)], is preferably from 0.015 to 20, more preferably from 0.015 to 12, more preferably from 0.08 to 6, further more preferably from 0.15 to 6, even further more preferably from 0.4 to 0.8.
<15> The oral composition according to any one of <1> to <14>, wherein the component (A) is preferably derived from one or more selected from the group consisting of a green coffee bean and a lightly roasted coffee bean.
<16> The oral composition according to any one of <1> to <14>, wherein the component (A) is preferably derived from a lightly roasted coffee bean having an L value of 30 or more and 60 or less.
<17> The oral composition according to <16>, wherein the lightly roasted coffee bean has an L value of preferably 32 or more, more preferably 34 or more, still more preferably 36 or more, still further more preferably 38 or more, still further more preferably 40 or more, and 60 or less.
<18> The oral composition according to any one of <1> to <17>, preferably further comprising 4-vinylguaiacol as a component (C).
<19> The oral composition according to <18>, wherein a content of the component (C) in the oral composition is preferably 0.1 mass ppm or more, more preferably 0.8 mass ppm or more, and is preferably 2 mass ppm or less, more preferably 1.4 mass ppm or less.
<20> The oral composition according to <18>, wherein a content of the component (C) in the oral composition is preferably from 0.1 mass ppm to 2 mass ppm, more preferably from 0.8 mass ppm to 1.4 mass ppm.
<21> The oral composition according to any one of <18> to <20>, wherein a mass ratio of the component (B) to a total amount of the component (A) and the component (C), [(B)/[(A)+(C)]], is preferably 0.01 or more, more preferably 0.02 or more, still more preferably 0.05 or more, still further more preferably 0.5 or more, and is preferably 5 or less, more preferably 4 or less, still more preferably 2 or less, still further more preferably 1 or less.
<22> The oral composition according to any one of <18> to <20>, wherein a mass ratio of the component (B) to a total amount of the component (A) and the component (C), [(B)/[(A)+(C)]], is preferably from 0.01 to 5, more preferably from 0.02 to 4, still more preferably from 0.05 to 2, still further more preferably from 0.5 to 1.
<23> The oral composition according to any one of <18> to <22>, wherein a mass ratio of the component (B) to the component (C), [(B)/(C)], is preferably 0.03 or more, more preferably 0.6 or more, still more preferably 0.8 or more, and is preferably 8 or less, more preferably 3 or less, still more preferably 2 or less.
<24> The oral composition according to any one of <18> to <22>, wherein a mass ratio of the component (B) to the component (C), [(B)/(C)], is preferably from 0.03 to 8, more preferably from 0.6 to 3, still more preferably from 0.8 to 2.
<25> The oral composition according to any one of <18> to <24>, wherein a mass ratio of the component (C) to the component (A), [(C)/(A)], is preferably 0.5 or more, more preferably 1 or more, and is preferably 4 or less, more preferably 3 or less.
<26> The oral composition according to any one of <18> to <24>, wherein a mass ratio of the component (C) to the component (A), [(C)/(A)], is preferably from 0.5 to 4, more preferably from 1 to 3.
<27> The oral composition according to any one of <18> to <26>, wherein a total content [(A)+(C)] of the component (A) and the component (C) in the oral composition is preferably 0.5 mass ppm or more, more preferably 1 mass ppm or more, and is preferably 50 mass ppm or less, more preferably 45 mass ppm or less.
<28> The oral composition according to any one of <18> to <26>, wherein a total content [(A)+(C)] of the component (A) and the component (C) in the oral composition is preferably from 0.5 mass ppm to 50 mass ppm, more preferably from 1 mass ppm to 45 mass ppm.
<29> The oral composition according to any one of <1> and <3> to <28>, wherein a form of the solid oral composition is preferably a powder form, a granule form, a tablet form, a rod form, a plate form, or a block form.
<30> The oral composition according to any one of <1> and <3> to <29>, wherein a solid content in the solid oral composition is preferably 90 mass% or more, more preferably 93 mass% or more, still more preferably 95 mass% or more, still further more preferably 97 mass% or more.
<31> The oral composition according to any one of <1> and <3> to <30>, wherein the solid oral composition has a water activity value (Aw) of preferably 0.6 or less, more preferably 0.5 or less, still more preferably 0.4 or less, still further more preferably 0.3 or less.
<32> The oral composition according to any one of <2> to <28>, wherein a form of the liquid oral composition is preferably a liquid, a concentrated liquid form, a gel form, or a jelly form.
<33> A suppressant for an unpleasant odor of (A) a branched fatty acid or (C) 4-vinylguaiacol, comprising (B) pyrazines as an active ingredient.
<34> A method of suppressing an unpleasant odor of a branched fatty acid, comprising causing (B) pyrazines to coexist at a mass ratio [(B)/(A)] of 0.015 or more with respect to (A) the branched fatty acid.
<35> Use of (B) pyrazines for suppression of an unpleasant odor of (A) a branched fatty acid or (C) 4-vinylguaiacol.
<36> The suppressant for an unpleasant odor according to <33>, the method of suppressing an unpleasant odor according to <34>, or the use according to <35>, wherein (A) the branched fatty acid is preferably one or more selected from the group consisting of isobutyric acid, 2-methylbutyric acid, and isovaleric acid.
<37> The suppressant for an unpleasant odor according to <33>, the method of suppressing an unpleasant odor according to <34>, or the use according to <35>, wherein (A) the branched fatty acid is preferably isovaleric acid.
<38> The suppressant for an unpleasant odor according to any one of <33>, <36>, and <37>, the method of suppressing an unpleasant odor according to any one of <34>, <36>, and <37>, or the use according to any one of <35> to <37>, wherein (B) the pyrazines are preferably one or more selected from the group consisting of pyrazine, methylpyrazine, ethylpyrazine, dimethylpyrazine, trimethylpyrazine, tetramethylpyrazine, ethylmethylpyrazine, isobutylmethylpyrazine, ethyldimethylpyrazine, dimethylethylpyrazine, diethylmethylpyrazine, acetylpyrazine, methoxymethylpyrazine, and isobutylmethoxypyrazine.
<39> The suppressant for an unpleasant odor according to any one of <33>, <36>, and <37>, the method of suppressing an unpleasant odor according to any one of <34>, <36>, and <37>, or the use according to any one of <35> to <37>, wherein (B) the pyrazines are preferably one or more selected from the group consisting of pyrazine, 2-methylpyrazine, 2-ethylpyrazine, 2,3-dimethylpyrazine, 2,5-dimethylpyrazine, 2,6-dimethylpyrazine, 2,3,5-trimethylpyrazine, 2,3,5,6-tetramethylpyrazine, 2-ethyl-3-methylpyrazine, 2-ethyl-5-methylpyrazine, 2-ethyl-6-methylpyrazine, 2-ethyl-3-methylpyrazine, 2-isobutyl-3-methylpyrazine, 2-ethyl-3,5-dimethylpyrazine, 2,3-diethyl-5-methylpyrazine, 2-acetylpyrazine, 2-methoxy-3-methylpyrazine, and 2-isobutyl-3-methoxypyrazine.
<40> The suppressant for an unpleasant odor according to any one of <33>, <36>, and <37>, the method of suppressing an unpleasant odor according to any one of <34>, <36>, and <37>, or the use according to any one of <35> to <37>, wherein (B) the pyrazines are preferably one or more selected from the group consisting of pyrazine, 2-methylpyrazine, 2-ethylpyrazine, 2,5-dimethylpyrazine, 2-acetylpyrazine, and 2-methoxy-3-methylpyrazine.
<41> The suppressant for an unpleasant odor according to any one of <33>, <36>, and <37>, the method of suppressing an unpleasant odor according to any one of <34>, <36>, and <37>, or the use according to any one of <35> to <37>, wherein (B) the pyrazines are preferably 2-methoxy-3-methylpyrazine.
<42> The suppressant for an unpleasant odor according to any one of <33> and <36> to <41>, or the method of suppressing an unpleasant odor according to any one of <34> and <36> to <41>, wherein a mass ratio of (B) the pyrazines to (A) the branched fatty acid, [(B)/(A)], is preferably 0.08 or more, more preferably 0.15 or more, still more preferably 0.4 or more, and is preferably 20 or less, more preferably 12 or less, still more preferably 6 or less, still further more preferably 0.8 or less.
<43> The suppressant for an unpleasant odor according to any one of <33> and <36> to <41>, or the method of suppressing an unpleasant odor according to any one of <34> and <36> to <41>, wherein a mass ratio of (B) the pyrazines to (A) the branched fatty acid, [(B)/(A)], is preferably from 0.015 to 20, more preferably from 0.015 to 12, still more preferably from 0.08 to 6, still further more preferably from 0.15 to 6, still further more preferably from 0.4 to 0.8.
<44> The suppressant for an unpleasant odor according to any one of <33> and <36> to <43>, wherein a mass ratio of (B) the pyrazines to (C) 4-vinylguaiacol, [(B)/(C)], is preferably 0.03 or more, more preferably 0.6 or more, still more preferably 0.8 or more, and is preferably 8 or less, more preferably 3 or less, still more preferably 2 or less.
<45> The suppressant for an unpleasant odor according to any one of <33> and <36> to <43>, wherein a mass ratio of (B) the pyrazines to (C) 4-vinylguaiacol, [(B)/(C)], is preferably from 0.03 to 8, more preferably from 0.6 to 3, still more preferably from 0.8 to 2.
<46> The use according to any one of <35> to <41>, wherein a mass ratio of (C) 4-vinylguaiacol to (A) the branched fatty acid, [(C)/(A)], is preferably 0.5 or more, more preferably 1 or more, and is preferably 4 or less, more preferably 3 or less.
<47> The use according to any one of <35> to <41>, wherein a mass ratio of (C) 4-vinylguaiacol to (A) the branched fatty acid, [(C)/(A)], is preferably from 0.5 to 4, more preferably from 1 to 3.

### Examples

Reagents used in Examples are as described below.
·Isovaleric acid: FUJIFILM Wako Pure Chemical Corporation
·Pyrazine: FUJIFILM Wako Pure Chemical Corporation
·Acetylpyrazine: Tokyo Chemical Industry Co., Ltd.
·2-Methylpyrazine: Tokyo Chemical Industry Co., Ltd.
·2-Ethylpyrazine: Tokyo Chemical Industry Co., Ltd.
·2-Methoxy-3-methylpyrazine: Tokyo Chemical Industry Co., Ltd.
·2,5-Dimethylpyrazine: Tokyo Chemical Industry Co., Ltd.
·Green coffee bean extract: LUNA PHENON C-200, Kao Corporation
·4-Vinylguaiacol: Combi-Blocks
·Dextrin: Sanwa Starch Co., Ltd.
·Maltitol: Mitsubishi Corporation Life Sciences Limited
·Lactose: Shizen Kenkosha
·Ethanol: Traceable 99, Japan Alcohol Trading Co., Ltd.

### 1. Analysis of Branched Fatty Acid

A branched fatty acid may be analyzed in a third-party organization by a GC/MS method or a HPLC method. The analysis by the GC/MS method may be submitted to Japan Food Research Laboratories, and the analysis by the HPLC method may be submitted to Shimadzu Techno-Research, Inc.

### 2. Analysis of Pyrazines, 4-Vinylguaiacol, and furfuryl mercaptan

A sample was sampled in a vial, and a flavor component in the headspace of the vial was adsorbed with SPME fibers and subjected to GC/MS measurement.

Conditions for the analysis are as described below.
·Column: VF-WAX, inner diameter: 0.25 mm×length: 60 m, film thickness: 0.25 µm
·Temperature program: 35°C (4 min) → 130°C, temperature increase at 3°C/min → 240°C (15 min), temperature increase at 5°C/min
·Column flow rate: 1.5 ml/min (He), constant flow rate mode
·Inlet temperature: 240°C
·Injection mode: splitless
·Detector: MS
·Ion source temperature: 240°C
·Ionization method: EI (70 eV)
·SPME fibers: 50/30 µm, DVB/CAR/PDMS (manufactured by Sigma-Aldrich)

### 3. Measurement of Water Activity Value

The water activity value of a solid oral composition after its production was measured with a water activity meter (Pawkit, manufactured by Decagon Devices, Inc.) at 20°C and 60%RH (relative humidity).

### 4. Sensory Evaluation

Sensory tests for the "intensity of the unpleasant odor of isovaleric acid," the "intensity of the chemical odor of pyrazines," and the "intensity of the unpleasant odor of 4-vinylguaiacol" at the time of the ingestion of a solid oral composition obtained in each of Examples and Comparative Examples were performed by three expert panelists in accordance with the following procedures.

### (1) Intensity of Unpleasant Odor of Isovaleric Acid

First, "isovaleric acid unpleasant odor intensity standards" whose concentrations had been adjusted in advance so that the intensity of the "unpleasant odor of isovaleric acid" varied in five grades at equal intervals were prepared by using the isovaleric acid reagent. Next, the respective expert panelists agreed that the intensities of the unpleasant odor of isovaleric acid at the respective concentrations were given scores shown in Table 1. Next, each of the expert panelists ingested the "isovaleric acid unpleasant odor intensity standards" in order of increasing isovaleric acid concentration, and memorized their "intensities of the unpleasant odor of isovaleric acid." Next, the respective expert panelists evaluated the degree of the "intensity of the unpleasant odor of isovaleric acid" at the time of the ingestion of a subject solid oral composition, and determined a standard in which the "intensity of the unpleasant odor of isovaleric acid" was closest to that of the composition out of the "isovaleric acid unpleasant odor intensity standards." Then, the final score of the composition was determined through discussion on the basis of the scores determined by the respective expert panelists. With regard to the scores, a smaller numerical value means that the intensity of the unpleasant odor of isovaleric acid is weaker.

**Table 1**

| <Isovaleric Acid Unpleasant Odor Intensity Standards> | | |
|---|---|---|
| Score of unpleasant odor | Composition | Intensity of unpleasant odor of isovaleric acid |
| 5 | 0.0005% of isovaleric acid + maltitol serving as balance | Strongly sensed |
| 4 | 0.00005% of isovaleric acid + maltitol serving as balance | Sensed |
| 3 | 0.00001% of isovaleric acid + maltitol serving as balance | Weakly sensed |
| 2 | 0.000001% of isovaleric acid + maltitol serving as balance | Very slightly sensed |
| 1 | 100% of maltitol | Not sensed at all |

### (2) Intensity of Chemical Odor of Pyrazines

First, "chemical odor intensity standards" whose concentrations had been adjusted in advance so that the intensity of the "chemical odor" varied in five grades at equal intervals were prepared by using the pyrazine reagent. Next, the respective expert panelists agreed that the intensities of the chemical odor at the respective concentrations were given scores shown in Table 2. Next, each of the expert panelists ingested the "chemical odor intensity standards" in order of increasing isovaleric acid concentration, and memorized their "intensities of the chemical odor." Next, the respective expert panelists evaluated the degree of the "intensity of the chemical odor" at the time of the ingestion of a subject solid oral composition, and determined a standard in which the "intensity of the chemical odor" was closest to that of the composition out of the "chemical odor intensity standards." Then, the final score of the composition was determined through discussion on the basis of the scores determined by the respective expert panelists. With regard to the scores, a smaller numerical value means that the intensity of the chemical odor of pyrazines is weaker.

**Table 2**

| <Chemical Odor Intensity Standards> | | |
|---|---|---|
| Score of chemical odor | Composition | Intensity of chemical odor of pyrazines |
| 5 | 0.0005% of pyrazine + maltitol serving as balance | Strongly sensed |
| 4 | 0.00005% of pyrazine + maltitol serving as balance | Sensed |
| 3 | 0.000025% of pyrazine + maltitol serving as balance | Weakly sensed |
| 2 | 0.000001% of pyrazine + maltitol serving as balance | Very slightly sensed |
| 1 | 100% of maltitol | Not sensed at all |

### (3) Intensity of Unpleasant Odor of 4-Vinylguaiacol

First, "4-vinylguaiacol (hereinafter also referred to as "4-VG") unpleasant odor intensity standards" whose concentrations had been adjusted in advance so that the intensity of the "unpleasant odor of 4-VG" varied in five grades at equal intervals were prepared by using the 4-VG reagent. Next, the respective expert panelists agreed that the intensities of the unpleasant odor of 4-VG at the respective concentrations were given scores shown in Table 3. Next, each of the expert panelists ingested the "4-VG unpleasant odor intensity standards 1" in order of increasing 4-VG concentration, and memorized their "intensities of the unpleasant odor of 4-VG." Next, the respective expert panelists evaluated the degree of the "intensity of the unpleasant odor of 4-VG" at the time of the ingestion of a subject solid oral composition, and determined a standard in which the "intensity of the unpleasant odor of 4-VG" was closest to that of the composition out of the "4-VG unpleasant odor intensity standards." Then, the final score of the composition was determined through discussion on the basis of the scores determined by the respective expert panelists. With regard to the scores, a smaller numerical value means that the intensity of the unpleasant odor of 4-VG is weaker.

**Table 3**

| <4-VG Unpleasant Odor Intensity Standards> | | |
|---|---|---|
| Score of unpleasant odor | Composition | Intensity of unpleasant odor of 4-VG |
| 5 | 0.0005% of 4-VG + maltitol serving as balance | Strongly sensed |
| 4 | 0.0001% of 4-VG + maltitol serving as balance | Sensed |
| 3 | 0.000025% of 4-VG + maltitol serving as balance | Weakly sensed |
| 2 | 0.000005% of 4-VG + maltitol serving as balance | Very slightly sensed |
| 1 | 100% of maltitol | Not sensed at all |

### Examples 1 to 10, and Comparative Examples 1 and 2

The respective components shown in Table 4 were uniformly mixed to prepare solid oral compositions. Each of the resultant solid oral compositions was analyzed, and was subjected to sensory evaluations for the "intensity of the unpleasant odor of isovaleric acid" and the "intensity of the chemical odor of pyrazines." The results are shown in Table 4. The water activity values of the solid oral compositions after their production were measured. As a result, the values were each 0.4 or less.

**Table 4**

| | | | Exampl e 1 | Exampl e 2 | Exampl e 3 | Exampl e 4 | Exampl e 5 | Exampl e 6 | Exampl e 7 | Exampl e 8 | Exampl e 9 | Exampl e 10 | Comparat ive Example 1 | Comparat ive Example 2 |
|---|---|---|---|---|---|---|---|---|---|---|---|---|---|---|
| Formulation | (A) Isovaleric acid | [ppm] | 0.5 | 0.5 | 0.5 | 0.5 | 0.5 | 0.5 | 0.5 | 0.5 | 0.5 | 0.5 | 0.5 | 0.5 |
| | (B) 2-Methoxy-3-methylpyrazine | [ppm] | 0.01 | 0.025 | 0.05 | 0.1 | 0.15 | 0.25 | 0.5 | 1 | 2.5 | 5 | 0 | 0.005 |
| | Maltitol | [mass%] | Balanc e | Balanc e | Balanc e | Balanc e | Balanc e | Balanc e | Balanc e | Balanc e | Balanc e | Balanc e | Balance | Balance |
| | Total | [mass%] | 100 | 100 | 100 | 100 | 100 | 100 | 100 | 100 | 100 | 100 | 100 | 100 |
| Calculated value | Mass ratio [(B)/(A)] | - | 0.02 | 0.05 | 0.1 | 0.2 | 0.3 | 0.5 | 1 | 2 | 5 | 10 | 0 | 0.01 |
| Evaluation | Intensity of unpleasant odor of isovaleric acid | | 3 | 3 | 3 | 2 | 2 | 1 | 1 | 1 | 1 | 1 | 4 | 4 |
| | Intensity of chemical odor of pyrazines | | 2 | 2 | 2 | 2 | 2 | 3 | 4 | 4 | 4 | 5 | 1 | 1 |

### Examples 11 to 14 and Comparative Example 3

The respective components shown in Table 5 were uniformly mixed to prepare solid oral compositions. Each of the resultant solid oral compositions was analyzed, and was subjected to sensory evaluations for the "intensity of the unpleasant odor of isovaleric acid" and the "intensity of the chemical odor of pyrazines." The results are shown in Table 5. The water activity values of the solid oral compositions after their production were measured. As a result, the values were each 0.4 or less.

**Table 5**

| | | | Example 11 | Example 12 | Example 13 | Example 14 | Comparative Example 3 |
|---|---|---|---|---|---|---|---|
| Formulation | (A) Isovaleric acid | [ppm] | 0.01 | 5 | 5 | 5 | 5 |
| | (B) 2-Methoxy-3-methylpyrazine | [ppm] | 0.005 | 0.1 | 2.5 | 50 | 0 |
| | Maltitol | [mass%] | Balance | Balance | Balance | Balance | Balance |
| | Total | [mass%] | 100 | 100 | 100 | 100 | 100 |
| Calculated value | Mass ratio [(B)/(A)] | - | 0.5 | 0.02 | 0.5 | 10 | 0 |
| Evaluation | Intensity of unpleasant odor of isovaleric acid | | 1 | 4 | 1 | 1 | 5 |
| | Intensity of chemical odor of pyrazines | | 1 | 2 | 4 | 5 | 1 |

### Examples 15 to 19

The respective components shown in Table 6 were uniformly mixed to prepare solid oral compositions. Each of the resultant solid oral compositions was analyzed, and was subjected to sensory evaluations for the "intensity of the unpleasant odor of isovaleric acid" and the "intensity of the chemical odor of pyrazines." The results are shown in Table 6 together with the results of Example 6 and Comparative Example 1. The water activity values of the solid oral compositions after their production were measured. As a result, the values were each 0.4 or less.

**Table 6**

| | | | Example 6 | Example 15 | Example 16 | Example 17 | Example 18 | Example 19 | Comparative Example 1 |
|---|---|---|---|---|---|---|---|---|---|
| Formulation | (A) Isovaleric acid | [ppm] | 0.5 | 0.5 | 0.5 | 0.5 | 0.5 | 0.5 | 0.5 |
| | (B) 2-Methoxy-3-methylpyrazine | [ppm] | 0.25 | | | | | | 0 |
| | (B) Pyrazine | [ppm] | | 0.25 | | | | | 0 |
| | (B) 2-Methylpyrazine | [ppm] | | | 0.25 | | | | 0 |
| | (B) 2-Ethylpyrazine | [ppm] | | | | 0.25 | | | 0 |
| | (B) Acetylpyrazine | [ppm] | | | | | 0.25 | | 0 |
| | (B) 2,5-Dimethylpyrazine | [ppm] | | | | | | 0.25 | 0 |
| | Maltitol | [mass%] | Balance | Balance | Balance | Balance | Balance | Balance | Balance |
| | Total | [mass%] | 100 | 100 | 100 | 100 | 100 | 100 | 100 |
| Calculated value | Mass ratio [(B)/(A)] | - | 0.5 | 0.5 | 0.5 | 0.5 | 0.5 | 0.5 | 0 |
| Evaluation | Intensity of unpleasant odor of isovaleric acid | | 1 | 2 | 2 | 2 | 1 | 2 | 4 |
| | Intensity of chemical odor of pyrazines | | 3 | 2 | 2 | 2 | 5 | 2 | 1 |

### Examples 20 and 21, and Comparative Examples 4 and 5

The respective components shown in Table 7 were uniformly mixed to prepare solid oral compositions. Each of the resultant solid oral compositions was analyzed, and was subjected to sensory evaluations for the "intensity of the unpleasant odor of isovaleric acid" and the "intensity of the chemical odor of pyrazines." The results are shown in Table 7 together with the results of Example 6 and Comparative Example 1. The water activity values of the solid oral compositions after their production were measured. As a result, the values were each 0.4 or less.

**Table 7**

| | | | Example 6 | Example 20 | Example 21 | Comparative Example 1 | Comparative Example 4 | Comparative Example 5 |
|---|---|---|---|---|---|---|---|---|
| Formulation | (A) Isovaleric acid | [ppm] | 0.5 | 0.5 | 0.5 | 0.5 | 0.5 | 0.5 |
| | (B) 2-Methoxy-3-methylpyrazine | [ppm] | 0.25 | 0.25 | 0.25 | 0 | 0 | 0 |
| | Maltitol | [mass%] | Balance | | - | Balance | | |
| | Dextrin | [mass%] | | Balance | | | Balance | |
| | Lactose | [mass%] | | | Balance | | | Balance |
| | Total | [mass%] | 100 | 100 | 100 | 100 | 100 | 100 |
| Calculated value | Mass ratio [(B)/(A)] | - | 0.5 | 0.5 | 0.5 | 0 | 0 | 0 |
| Evaluation | Intensity of unpleasant odor of isovaleric acid | | 1 | 1 | 1 | 4 | 4 | 4 |
| | Intensity of chemical odor of pyrazines | | 3 | 3 | 3 | 1 | 1 | 1 |

### Examples 22 to 28 and Comparative Example 6

The respective components shown in Table 8 were uniformly mixed to prepare solid oral compositions. Each of the resultant solid oral compositions was analyzed, and was subjected to sensory evaluations for the "intensity of the unpleasant odor of isovaleric acid," the "intensity of the chemical odor of pyrazines," and the "intensity of the unpleasant odor of 4-vinylguaiacol." The results are shown in Table 8. The water activity values of the solid oral compositions after their production were measured. As a result, the values were each 0.4 or less.

**Table 8**

| | | | Example 22 | Example 23 | Example 24 | Example 25 | Example 26 | Example 27 | Example 28 | Comparative Example 6 |
|---|---|---|---|---|---|---|---|---|---|---|
| Formulation | (A) Isovaleric acid | [ppm] | 0.5 | 0.5 | 0.5 | 0.5 | 0.5 | 0.5 | 0.5 | 0.5 |
| | (B) 2-Methoxy-3-methylpyrazine | [ppm] | 0.05 | 0.1 | 0.25 | 0.5 | 1 | 2.5 | 5 | 0.005 |
| | (C) 4-VG | [ppm] | 1 | 1 | 1 | 1 | 1 | 1 | 1 | 1 |
| | Maltitol | [mass%] | Balance | Balance | Balance | Balance | Balance | Balance | Balance | Balance |
| | Total | [mass%] | 100 | 100 | 100 | 100 | 100 | 100 | 100 | 100 |
| Calculated value | (A) Isovaleric acid+(C) 4-VG | [ppm] | 1.5 | 1.5 | 1.5 | 1.5 | 1.5 | 1.5 | 1.5 | 1.5 |
| | Mass ratio [(B)/(A)] | - | 0.1 | 0.2 | 0.5 | 1 | 2 | 5 | 10 | 0.01 |
| | Mass ratio [(B)/(C)] | - | 0.05 | 0.1 | 0.25 | 0.5 | 1 | 2.5 | 5 | 0.005 |
| | Mass ratio [(B)/(A+C)] | - | 0.03 | 0.07 | 0.17 | 0.33 | 0.67 | 1.67 | 3.33 | 0.00 |
| | Mass ratio [(C)/(A)] | - | 2.0 | 2.0 | 2.0 | 2.0 | 2.0 | 2.0 | 2.0 | 2.0 |
| Evaluation | Intensity of unpleasant odor of isovaleric acid | | 3 | 3 | 3 | 2 | 2 | 2 | 1 | 4 |
| | Intensity of chemical odor of pyrazines | | 1 | 2 | 2 | 2 | 3 | 3 | 4 | 1 |
| | Intensity of unpleasant odor of 4-VG | | 4 | 3 | 3 | 3 | 2 | 2 | 1 | 4 |

### Example 29 and Comparative Example 7

The respective components shown in Table 9 were uniformly mixed to prepare solid oral compositions. The green coffee bean extract was used in such an amount as described below: an isovaleric acid unpleasant odor intensity standard composition was prepared by adding 0.01 mass ppm, 0.1 mass ppm, 0.5 mass ppm, or 5 mass ppm of the isovaleric acid reagent to maltitol; and the extract was used so that the intensity of the unpleasant odor of isovaleric acid comparable to that of the isovaleric acid unpleasant odor intensity standard composition prepared by adding 0.5 mass ppm of the isovaleric acid reagent was obtained. Then, each of the resultant solid oral compositions was analyzed, and was subjected to sensory evaluations for the "intensity of the unpleasant odor of isovaleric acid," the "intensity of the chemical odor of pyrazines, " and the "intensity of the unpleasant odor of 4-vinylguaiacol." The results are shown in Table 9. The water activity values of the solid oral compositions after their production were measured. As a result, the values were each 0.4 or less.

**Table 9**

| | | | Example 29 | Comparative Example 7 |
|---|---|---|---|---|
| Formulation | Green coffee bean extract | [mass%] | Balance⁽¹⁾ | Balance⁽¹⁾ |
| | (B) 2-Methoxy-3-methylpyrazine | [ppm] | 0.5 | 0 |
| | Total | [mass%] | 100 | 100 |
| Analyzed or calculated value | (A) Isovaleric acid | [ppm] | 0.5 | 0.5 |
| | (C) 4-VG | [ppm] | 1 | 1 |
| | (A) Isovaleric acid+(C) 4-VG | [ppm] | 1.5 | 1.5 |
| | Mass ratio [(B)/(A)] | - | 1 | 0 |
| | Mass ratio [(B)/(C)] | - | 0.5 | 0 |
| | Mass ratio [(B)/(A+C)] | - | 0.33 | 0.00 |
| | Mass ratio [(C)/(A)] | - | 2.0 | 2.0 |
| Evaluation | Intensity of unpleasant odor of isovaleric acid | | 1 | 4 |
| | Intensity of chemical odor of pyrazines | | 2 | 1 |
| | Intensity of unpleasant odor of 4-VG | | 2 | 4 |

| | | | | |
|---|---|---|---|---|
| (1) Such an amount that the intensity of the unpleasant odor of isovaleric acid comparable to that of 0.5 mass ppm of isovaleric acid is obtained | | | | |

It found from Tables 4 to 9 that the unpleasant odor of a branched fatty acid can be suppressed by incorporating pyrazines at a certain quantitative ratio or more with respect to the branched fatty acid. In addition, it is found from Table 9 that even when 4-vinylguaiacol known as a causative substance for an unpleasant odor is further incorporated, the unpleasant odors of the branched fatty acid and 4-vinylguaiacol can be simultaneously suppressed by incorporating the pyrazines at a certain quantitative ratio or more with respect to the total amount of the branched fatty acid and 4-vinylguaiacol.

## Claims

1. A solid oral composition, comprising the following components (A) and (B):
(A) 0.00005 mass ppm to 40 mass ppm of a branched fatty acid; and
(B) pyrazines,
wherein a mass ratio of the component (B) to the component (A), [(B)/(A)], is 0.015 or more.

2. The solid oral composition according to claim 1, wherein the component (A) is one or more selected from the group consisting of isobutyric acid, 2-methylbutyric acid, and isovaleric acid.

3. The solid oral composition according to claim 1 or 2, wherein the component (B) is one or more selected from the group consisting of pyrazine, methylpyrazine, ethylpyrazine, dimethylpyrazine, trimethylpyrazine, tetramethylpyrazine, ethylmethylpyrazine, isobutylmethylpyrazine, ethyldimethylpyrazine, dimethylethylpyrazine, diethylmethylpyrazine, acetylpyrazine, methoxymethylpyrazine, and isobutylmethoxypyrazine.

4. The solid oral composition according to any one of claims 1 to 3, wherein a content of the component (B) is from 0.004 mass ppm to 60 mass ppm.

5. The solid oral composition according to any one of claims 1 to 4, further comprising 4-vinylguaiacol as a component (C), wherein a mass ratio of the component (B) to a total amount of the component (A) and the component (C), [(B)/[(A)+(C)]], is 0.01 or more.

6. The solid oral composition according to any one of claims 1 to 5, wherein a mass ratio of the component (B) to the component (C), [(B)/(C)], is from 0.03 to 8.

7. A suppressant for an unpleasant odor of a branched fatty acid or 4-vinylguaiacol, comprising pyrazines as an active ingredient.

8. A method of suppressing an unpleasant odor of a branched fatty acid, comprising causing (B) pyrazines to coexist at a mass ratio [(B)/(A)] of 0.015 or more with respect to (A) the branched fatty acid.
